# EUROPEAN PATENT APPLICATION

(11) **EP 1 935 485 A1**
(43) Date of publication of application: **25.06.2008**
(21) Application number: 06126841.3
(22) Date of filing: 21.12.2006
(51) Int. Cl.: B01J 19/12, B01L 3/00, G01N 1/44, H05B 6/64

(54) **Reaction vessel for a microwave heating system**

(71) Applicant: Biotage AB, 753 18 Uppsala (SE)
(72) Inventor: FAGRELL, Magnus, 756 46, UPPSALA (SE)
(74) Representative: Holmberg, Nils Anders Patrik

(57) **Abstract**

There is described a reaction vessel (25) for microwave heating of the load (5) in said vessel. The reaction vessel has a main axis, is provided with at least one reaction chamber in fluid connection with an inlet and an outlet, and the reaction vessel is adapted to be irradiated with microwaves. The reaction vessel comprises adjusting means (4,16) to adjust the position, shape and/or volume of the reaction chamber in order to optimise the heating conditions of the load in said reaction chamber, during microwave irradiation.

## Description

### Field of the invention

The present invention relates to a reaction vessel, a method and a kit, according to the preambles of the independent claims.

### Background of the invention

When using microwaves to heat up a reaction mixture, it is very important to optimize the interaction between the electromagnetic waves and the microwave absorbing reaction mixture. The microwave absorbing part of a system is usually called a load.

If a microwave heating system is mismatched the efficiency of the applied microwaves will be substantially lower compared to a matched system and a major part of the microwaves will then be reflected backwards in the system and not absorbed by the load. This will in turn lead to unsatisfactory heating performance with low heating rate and heating capacity. By matching a system one means that the impedance of the transmitted wave and/or the impedance of the load are possible to adjust. In a perfect matched system the wave impedance and the load impedance have exactly the same value, e.g. 50Ω resulting in a complete absorption of microwaves into the load.

A mismatched system has several disadvantages, e.g. low heating efficiency of the load. Another disadvantage is the heating of other system components due to unfavourable electromagnetic field distribution that causes damages to the system.

A common way of changing or matching a system is to have a movable wall in the microwave cavity, tuning stubs or other mechanical devices to tune the system. Another method is to change the frequency of the used microwaves. However, this is very complicated and expensive, in particular when using a magnetron as microwave energy source.

Thus, the object of the present invention is to provide a reaction vessel for a microwave heating system, a method of using the system and a kit of reaction vessels, having a more optimal match between the applied microwaves and the load, compared to the systems and methods used today, in order to improve the overall efficiency of the heating process.

### Summary of the invention

The above object is achieved by the present invention according to the independent claims.

Preferred embodiments are set forth in the dependent claims.

In prior art solutions the reaction vessel contains a stationary, non movable load. The inventor has realized that if the position of the reaction chamber with the load would be movable or the dielectric properties of the reaction vessel components could be changed, it would be possible to arrange the load in a position or dielectric properties to achieve optimal heating.
Generally, the present invention relates to a microwave heating system comprising a reaction vessel and a method on how to match the system by individually changing the physical position, shape or volume of the load or the material in the reaction vessel components.

This is done by using a system of interchangeable components, referred to as load adjusting means, physically arranged so that the position of the reaction chamber in the reaction chamber easily can be changed in size and position or/and the material in the reaction vessel components

According to one preferred embodiment the reaction vessel comprises different sized end pieces and inserts to change the axial position of the load

According to another preferred embodiment the reaction chamber has a varying diameter or radial shape and the radial position of the load may then be changed.

The change may be incremental by using discrete components or continuous by using a positioning mechanism like a threaded connection between the end pieces and an adjusting nut.

In a further embodiment the dielectric properties in the reaction vessel may also be changed by using filling materials to fill the reaction chamber or portions of it, with different physical properties that thereby act as a tuning means. The filling material may have a structure that allows a liquid to flow through it.

According to still another embodiment the reaction chamber may be built up by layers of different filling material and thereby gaining different heating characteristics and distribution. The filling material may be either a passive component inert to the reaction or a part of the reaction system in the form of a reactant, catalyst, scavenger etc.

The reaction vessel may contain one reaction chamber or a number of interconnected reaction chambers divided by spacers and/or inserts in any combination. These may be active or non active during the reaction. This embodiment may promote multistage reactions or zones with different physical or chemical properties or behaviours.

The components in the system may be arranged so that the reaction chamber and thereby the load may be placed in any position in the cavity and thereby finding the optimal position that represents the best matched system that gives the highest efficiency (heating performance and/or chemical performance).

Adjusting means is defined as the components used to independently change the position, shape and/or volume of the reaction chamber in the reaction vessel. Typically components are end pieces, inserts, spacers etc. Another type of adjusting means is components made of dielectric material that change the distribution of the electromagnetic field in the reaction chamber in order to optimise the heating conditions. These components may typically be end pieces, spacers, inserts, beads or other types of particulate materials introduced into the reaction chamber. These optimisations are generally called tuning or matching of a microwave system.

The present invention also relates to a kit comprising a number of reaction vessels, each having different heating capabilities.

### Short description of the appended drawings

Figure 1 shows a longitudinal, cross-sectional schematic view of a microwave applicator including a reaction vessel according to a preferred embodiment of the present invention.
Figures 2a-2h show longitudinal, cross-sectional schematic views of different sizes of end pieces.
Figures 3a-3i show longitudinal, cross-sectional schematic views of different positions, shapes and volumes of the reaction chamber according to the present invention.
Figure 4 shows a longitudinal, cross-sectional schematic view of a reaction chamber according to the present invention, filled with a particulate material.
Figure 5 shows a longitudinal, cross-sectional schematic view of a reaction chamber according to the present invention.
Figure 6 shows a longitudinal, cross-sectional schematic view of a reaction chamber according to the present invention, where the reaction chamber is filled with different types of material separated by spacers.
Figure 7 shows cross-sectional views of different examples of spacers.
Figure 8 shows cross-sectional views of different examples of self contained filling material.
Figure 9 shows a cross-sectional view of an example of a cartridge for containing filling material.

### Detailed description of preferred embodiments of the invention

Generally the reaction vessel is typically made up of a reaction tube, an end piece in each end and optionally spacers, inserts and other components to create a reaction chamber. The above-mentioned parts may be made of different materials having different dielectric properties that effects the electromagnetic field and thereby optimizes the heating conditions.

In the context of the present application the load is defined as the reaction mixture residing in the reaction chamber. Reaction chamber is defined as the enclosed volume inside the reaction vessel and in fluid contact with the inlet and outlet of the reaction vessel. Reaction vessel is defined as a complete assembly that may be inserted and removed from a microwave applicator and comprising an inlet and an outlet and a reaction chamber. In the art of the present invention the term reaction vessel is synonymous to a reaction cartridge.

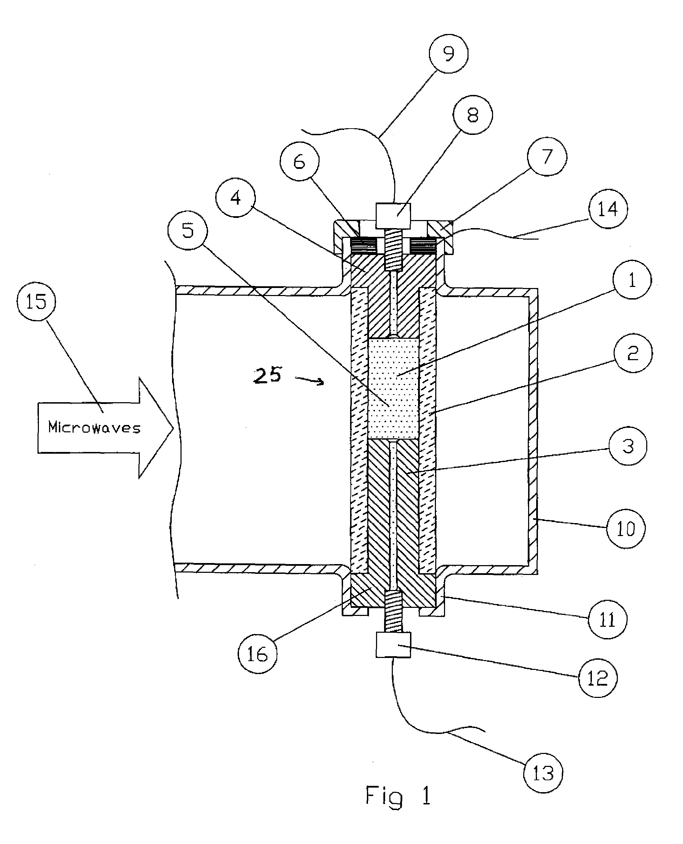

Figure 1 shows a longitudinal, cross-sectional schematic view of a microwave applicator including a reaction vessel according to a preferred embodiment of the present invention.

In figure 1 the reaction vessel 25 is arranged in a microwave cavity 10 for microwave heating 15 of a load 1 in the reaction chamber 5 enclosed by end pieces 4, 16 and a reaction tube 2. The reaction chamber is in fluid connection with an inlet and an outlet 9, 13. The reaction vessel comprises load adjusting means, in these embodiments the end pieces 4, 16, to adjust the position, shape or volume of the reaction chamber in order to optimise the heating conditions of the load in the reaction chamber, during heating. In the figure the end piece 16 is provided with a long internal length 3.

The reaction vessel is placed with its longitudinal axis oriented in parallel to the E-field if a wave guide type of cavity is used. However, the orientation of the reaction vessel could be arbitrary and adapted to the type of microwave applicator used. Dielectric applicators made of any dielectric material may also be used. The reaction vessel is preferably retained in the microwave cavity by a retaining mechanism 11, 7 in both ends of the cavity. The reaction vessel may also be free floating in its longitudinal direction without any retaining mechanisms. The end pieces 4,16 are then physically attached to the tube body 2 of the reaction vessel, e.g. by using threads and/or retaining rings on both the reaction tube and the end pieces.

The embodiment disclosed in figure 1 has an optional integrated pressure transducer 6 between one of the end pieces 4 and one of the retaining components 7. The end piece 4 may freely move in relation to the reaction tube 2 in its longitudinal direction and will then act on the pressure transducer in proportion to the internal pressure in the reaction chamber. The signal 14 from the pressure transducer may be used for control purposes.

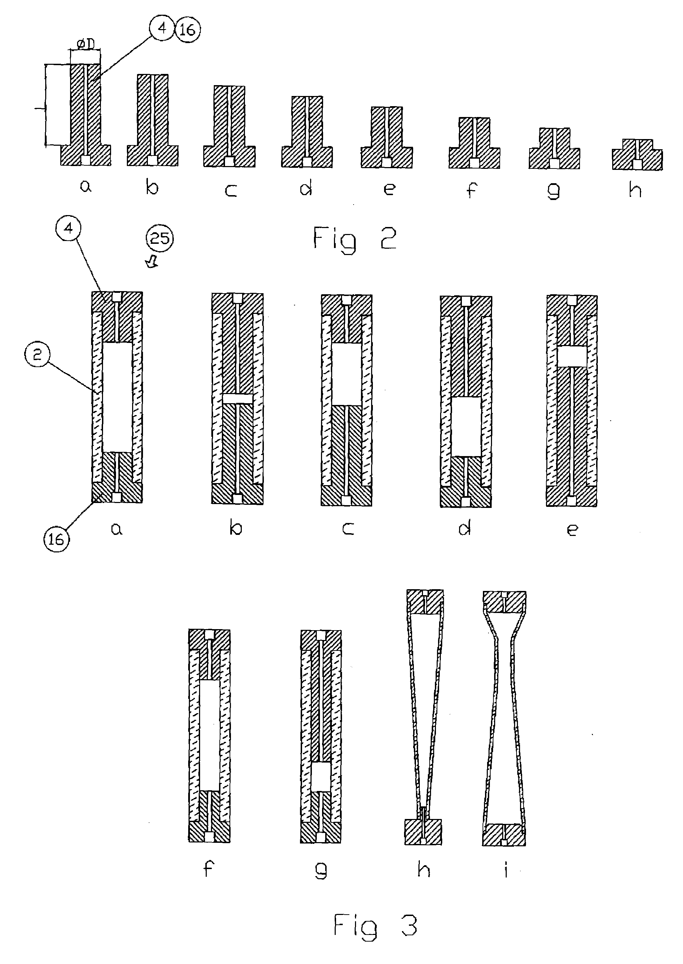

In order to find the optimal transfer of the microwaves to the load the length of the end pieces 4, 16 may be adjusted either by using different discrete end pieces with fixed lengths, shown in figures 2a-2h, or by using continuous adjustable end pieces that can be moved in the longitudinal direction of the reaction vessel to create a reaction chamber with the optimal volume and physical position.
The adjustment of the end pieces may be performed with the microwaves turned on or off.

Figures 3a-3g illustrate how different combinations of end pieces may be combined in order to perform the required optimization.

The diameter of the reaction vessel may also be varied independently of the length of the end pieces (see figures 3h and 3i). The physical shape of the reaction vessel may be arbitrary chosen with no limitation other than that it has to fit into the microwave cavity.
In a similar way the end pieces do not need to be limited to the shapes shown and may have any physical shape and dimension. The end pieces may also be made concentrically so that the position of the axis may be adjusted by turning the end pieces relative to the reaction vessel. A suitable sealing mechanism, e.g. an O-ring, may then be arranged between the end piece and the reaction tube of the reaction vessel.

The change in heating efficiency is monitored by measuring the standing wave ratio (SVR), the reflected microwave signal or indirectly by measuring the temperature in the reaction vessel. These procedures and techniques are well known to a person skilled in the art of microwave heating.

The measured values are then used to modify the heating conditions in order to optimize the reaction conditions. The optimisation may be done manually by the operator, or automatically by using a control system and suitable software or a combination thereof.

The end pieces and the tube body may be made from any material substantially transparent to microwaves or a dielectric material that contributes to the tuning of the system, like ceramic materials in the end piece to modify the shape and behaviour of the electromagnetic field within the cavity.

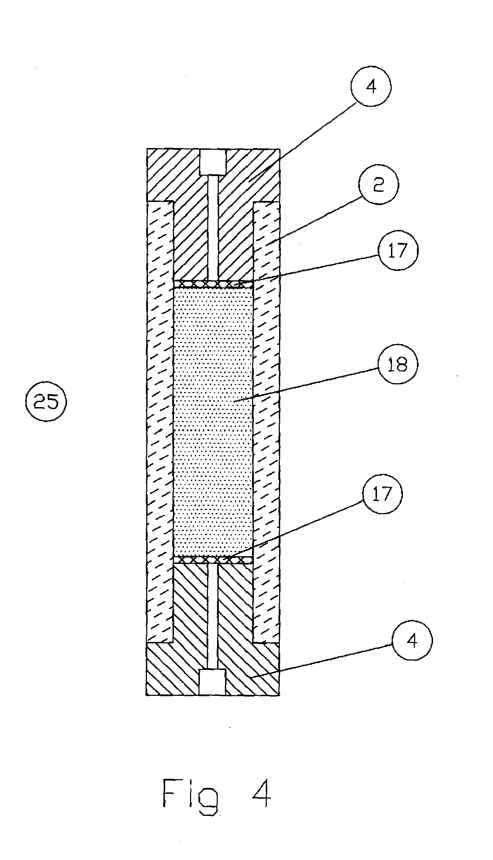

Figure 4 discloses an embodiment where a particulate material 18 is packed in the reaction vessel 25. The particulate material may be any material of any size. The particles are held in the reaction vessel by a frit/screen 17 in both ends at the inner end surface of the end pieces 4. The frit/screen 17 material having a pore size less than the particulate material, thereby retaining the material in the reaction vessel. The function of the particulate material is to optimize the heating conditions by acting as a tuning device for the microwave field. The material may be chemically modified on the surface to incorporate reactants that take part in the chemical reaction. The material may in itself be a reactant or catalyst that takes part in the chemical reaction either as a solid material, porous material, surface modified material, composite material or any combination thereof More often the material is more or less chemically inert and acts only as a dielectric material changing and tuning the microwave behaviour of the system. Combination of the two functions is also possible.
The frit/screen 17 may be made from any material and structure that retains the particles of the particulate material in the reaction vessel 25.

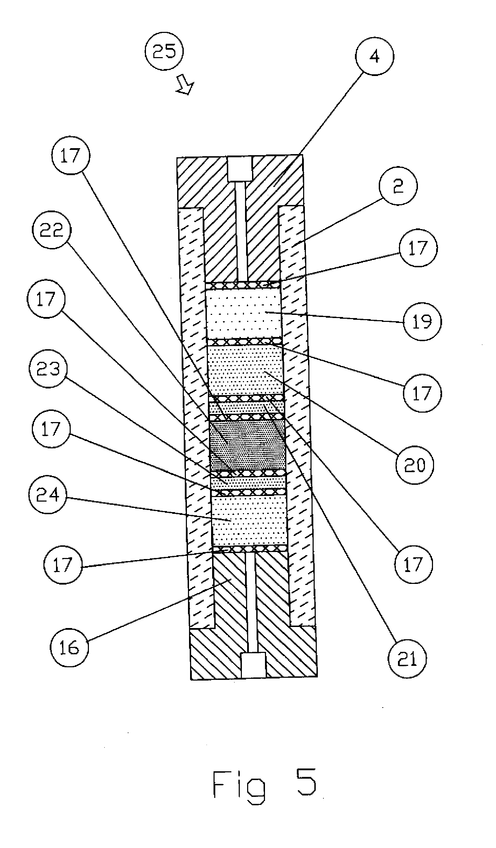

Figure 5 shows an embodiment where different particulate materials 19, 20, 21, 22, 23, 24 are combined in the reaction chamber. Each particulate material is separated by a frit/screen 17 in the reaction chamber.

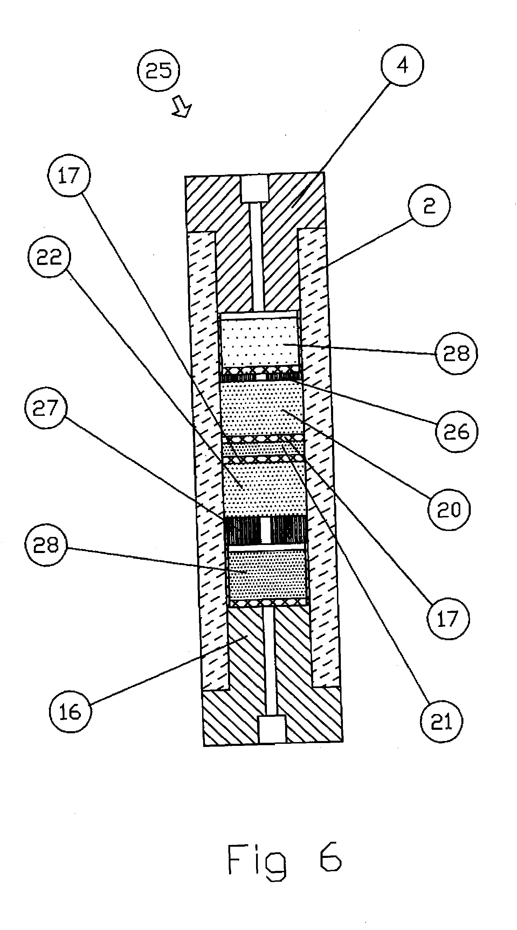

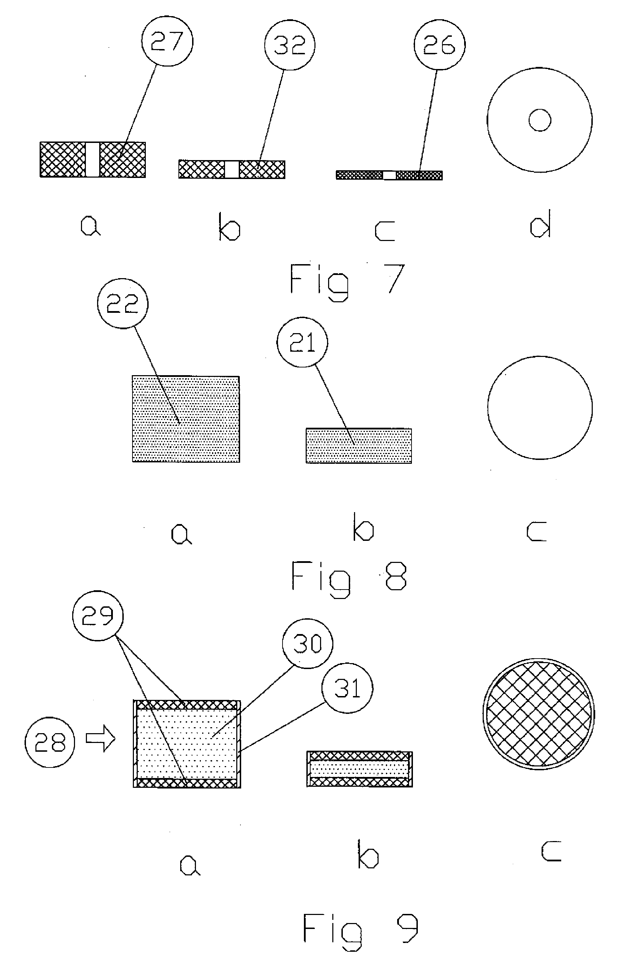

Figure 6 shows an embodiment where each material is separately contained in a holder 28 packed with the material 30 and contained in the holder 31 by adapting a frit/screen 29 at both ends of the holder (see also figure 9). The holder has an outer diameter slightly less than the inner diameter of the reaction vessel and thereby making it possible to stack several holders on top of each holder and partly or completely filling the reaction vessel. The holder may contain different materials with different dielectric and chemical properties to enable tuning of the system.

The filling material may also be formed into a self-contained or supporting blocks or structures 22, 21 by sintering, pressing, gluing or any other manufacturing method that forms a solid or porous block/structure that may be stacked on top of each other without using any spacers.
The stacked self-supporting structures may have different functionalities such as a reactant capable of promoting a chemical reaction during certain conditions, catalyst, or a scavenger. The self-supporting structures may also be used as spacers and thereby forming reaction chambers where material, not self-supported (like loose particles), is retained. The embodiment shown in figure 6 is provided with a number of blocks 21, 22 (see also figure 8) that are stacked in the reaction vessel. The blocks are separated by spacers 27, 32, 26 (see also figure 7) or frits/screens 17. The spacers are made from any suitable material, e.g. glass, ceramic, plastics etc. The blocks may also be combined with sections of particulate material 20, 21, 22, 28 that are placed between frits/screen 17.
Any combination of the described positioning of filling material may be possible.

The reaction chambers may be pre-filled with reagents, solid particles, catalyst material, porous material or any solid or porous material that might be used in the reaction. The material will be retained in the reaction chambers by forming it in structures that spatially keeps the material in place or by using a structure in the spacers that retains the material in the reaction chambers, e.g. a filter or a screen.

The reaction vessel components such as, spacers, inserts and end pieces may be made from a dielectric material that effects the electromagnetic field and thereby optimizes the heating conditions.

The outlet and inlet of the reaction vessel may be arranged as a flow through cell with the inlet placed at the opposite end relative to the outlet. The inlet and outlet may also be placed at the same end of the reaction chamber. This is applicable to all embodiments illustrated herein.

The reaction vessel may be pre-assembled with any combinations of the above-mentioned features. The end pieces may be provided with fittings for the inlet and outlet adapted for automation so the reaction vessel could be handled and inserted and removed from the microwave cavity by a robot or manually.

Furthermore, in order to improve the heating capabilities means for agitation may optionally be included in the reaction chamber. Stirring of the load is in particular necessary when low flow rates are applied.
The agitation means may by provided by a vertically arranged shaft having a helix screw that is mechanically rotated by a rotation means operating, e.g. mechanically or magnetically, on the shaft.

The reaction vessel is preferably a disposable unit.

The reaction vessel components such as, the end pieces 4,16 and the reaction tube 2 may be made from any microwave transparent, or reasonable microwave transparent, material such as glass, Teflon, quarts, peek, ceramics etc. The components may also be made from dielectric materials to promote the tuning effect of the system.

The filling material may be from any material suitable for its function.

The geometry of the reaction vessel may be arbitrary and adapted to optimize the tuning of the system.

The reaction vessel system may be used in any type of microwave cavity, e.g. open wave guide cavities like rectangular or cylindrical air filled types, evanescent mode applicators, ceramic/dielectric applicators etc.

The system may be used for both batch and continuous flow applications or any combinations thereof.

The complete reaction vessel may be pre-assembled with certain characteristics or assembled by the user from discrete components.

According to a preferred embodiment the present invention also relates to a kit of pre-assembled reaction vessels that may be used to optimise the heating conditions for a specific reaction or type of reactions.
The kit may then be made of a number of different reaction vessels where the reaction chamber has different position, shape, volume and/or dielectric properties, and may e.g. comprise 5-10 different reaction vessels having different characteristics. Preferably the vessels comprising reagents suitable for the desired chemical reaction, e.g. a catalyst or a scavenger and only the reactant(s) is (are) added by the user. Alternatively, the reaction vessels are empty and the user adds the desired reaction components.

Thus, the pre-packed reaction vessel may be packed with any type of material that is needed for the specific reaction or types of reactions. Typically packing materials are catalyst and all types of chemical reagents. The catalyst and reagents may be in particulate pure form, immobilized on a support/filling material like clay, polymers, ceramics etc. or combined in any form, shape or mixture.
When the optimal conditions have been found, the same reaction vessel or duplicates may be used to run the optimised reaction several times for research or production of the chemical compound generated by the optimised reaction.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Reaction vessel (25) for microwave heating of the load (5) in said vessel, the reaction vessel has a main axis and is provided with at least one reaction chamber in fluid connection with an inlet and an outlet, the reaction vessel is adapted to be irradiated with microwaves,
**characterized in that** the reaction vessel comprises adjusting means to independently adjust the position, shape or volume of the reaction chamber and/or to adjust the distribution of the electromagnetic field by changing the material of the adjusting means, in order to optimise the heating conditions of the load in said reaction chamber, during microwave irradiation.

2. Reaction vessel according to claim 1, wherein the adjusting means comprises at least one end piece having a specific length, among a number of predetermined lengths, to be arranged at one or both end openings of the reaction vessel in order to change the axial position of the content in the reaction vessel.

3. Reaction vessel according to claim 1 or 2, wherein the adjusting means further comprises spacers or inserts.

4. Reaction vessel according to any of claims 1-3, wherein the reaction vessel contains a number of interconnected reaction chambers divided from each other by spacers made from a support material, the spacers being active or non active during the reaction.

5. Reaction vessel according to any of claims 1-4, wherein the inlet and outlet to the reaction chamber are positioned at opposite ends of the vessel.

6. Reaction vessel according to any of claims 1-4, wherein the inlet and outlet to the reaction chamber are positioned at the same end of the reaction vessel.

7. Reaction vessel according to any of claims 1-6, wherein the reaction vessel is adapted to be used in any type of microwave cavity, e.g. open wave guide cavities like rectangular or cylindrical air filled types, or ceramic/dielectric cavities.

8. Reaction vessel according to any of the preceding claims, wherein the vessel is adapted to handle a continuous flow of the load.

9. Reaction vessel according to any of the preceding claims, wherein the vessel is a disposable unit.

10. Reaction vessel according to any of the preceding claims, wherein the reaction vessel is adapted to be assembled by the user from discrete components.

11. Method of optimizing the coupling between microwaves applied by a microwave applicator and a load in a reaction chamber inside a reaction vessel, comprising the steps of:
A - preparing and inserting the reaction vessel into the microwave applicator
B - applying microwave energy to the reaction vessel,
C - measuring the reflected microwave energy signal and/or the temperature of the reaction vessel, and
D - changing the position, shape or volume of the reaction chamber, by the adjusting means, and/or changing the material of the adjusting means, until a minimum or a predefined value of the reflected signal and/or a maximum or a predefined value of the temperature is found.

12. Kit including a number of reaction vessels according to any of claims 1-13, **characterized in that** each reaction vessel of the kit is unique with regard to the position, shape or volume of the reaction chamber and/or with regard to the material of the adjusting means.
